# EUROPEAN PATENT APPLICATION

(11) **EP 4 528 653 A1**
(43) Date of publication of application: **26.03.2025**
(21) Application number: 23824097.2
(22) Date of filing: 12.05.2023
(51) Int. Cl.: G06T 13/40, G06F 21/74, G06F 1/16, G06V 40/16, G06V 40/20

(54) **ELECTRONIC DEVICE FOR PROVIDING AVATAR ON BASIS OF CONTEXT INFORMATION AND METHOD FOR OPERATING SAME**

(30) Priority: 17.06.2022 KR 20220074339
(71) Applicant: Samsung Electronics Co., Ltd., Suwon-si, Gyeonggi-do 16677 (KR)
(72) Inventor: JEONG, Jiwon, Suwon-si, Gyeonggi-do 16677 (KR); KANG, Ikseon, Suwon-si, Gyeonggi-do 16677 (KR); SHIN, Hyunseok, Suwon-si, Gyeonggi-do 16677 (KR); LEE, Gunill, Suwon-si, Gyeonggi-do 16677 (KR)
(74) Representative: Appleyard Lees IP LLP
(86) International application number: PCT/KR2023/006456
(87) International publication number: WO 2023/243871

(57) **Abstract**

An electronic device for updating an avatar by reflecting user context information and an operation method thereof are provided. The electronic device according to an embodiment of the present disclosure may classify user context information into a public context and a private context for each application, update the avatar by applying the public context to the avatar, and provide an updated avatar.

## Description

### Technical Field

The present disclosure relates to an electronic device for providing an avatar based on user context information and an operation method thereof.

### Background Art

An avatar is a virtual graphical object that is a graphical representation of a user in the real world, such as a two-dimensional icon or a three-dimensional model. An avatar may be as simple as a photo of the user, a graphical object that may represent the user's appearance, facial expression, activity, interest, personality, or the like. An avatar may also be animated.

Avatars have been widely used in games, social network services (SNS), messenger application services, health applications, and exercise applications. Avatars used in games, SNS, or the like are generated and changed according to the purpose of a service provided by an application. In a game or SNS, an avatar of a user may not be related to the user's appearance, posture, or facial expression, or it may be similar to the user but can be changed as desired by the user. For example, a game or SNS may provide a function that allows a user to customize clothes, accessories, items, etc. of an avatar.

In a messenger application or video calling application executed by an electronic device such as a smartphone or a tablet personal computer (PC), an avatar is generated by capturing an image of a user's face, and is then used for the service by reflecting a facial expression thereon. In addition, a health application or an exercise application provides a function of generating and utilizing an avatar reflecting exercise history information and body information of the user.

An avatar provided via a general application service is provided according to the purpose of a service in an application, so there is a problem in that changes in user context are not reflected therein. For example, avatars provided in games do not reflect changes in a user's health status, changes in the user's body (e.g., changes in weight), changes in the user's facial expressions, etc., while avatars provided in health applications do not reflect changes in the user's facial expressions, changes in clothes being worn by the user, etc.

### Disclosure of Invention

### Technical Solution

According to an aspect of the present disclosure, an electronic device for providing an avatar is provided. According to an embodiment of the present disclosure, the electronic device may include a camera, at least one sensor, a memory storing at least one instruction, and at least one processor configured to execute the at least one instruction. The at least one processor may be configured to select user context information to be applied to the avatar from among pieces of user context information obtained via the at least one sensor, the camera, or applications. The at least one processor may be configured to set a privacy mode by determining whether to publicly disclose each piece of the selected user context information for each of the applications. The at least one processor may be configured to update the avatar based on the set privacy mode. The at least one processor may be configured to provide an updated avatar via an application being executed.

According to another aspect of the present disclosure, a method, performed by an electronic device, of providing an avatar is provided. The method performed by the electronic device may include selecting user context information to be applied to the avatar from among pieces of user context information obtained via a sensor, a camera, or applications. The method performed by the electronic device may include setting a privacy mode by determining whether to publicly disclose each piece of the selected user context information for each of the applications. The method performed by the electronic device may include updating the avatar based on the set privacy mode. The method performed by the electronic device may include providing an updated avatar via an application being executed.

According to another aspect of the present disclosure, there is provided a computer program product including a computer-readable storage medium having recorded thereon a program to be executed on a computer.

### Description of Drawings

The present disclosure will be readily understood from the following description taken in conjunction with the accompanying drawings in which reference numerals denote structural elements.
FIG. 1 is a conceptual diagram illustrating an operation in which an electronic device updates an avatar by reflecting user context information, according to an embodiment of the present disclosure.
FIG. 2 is a block diagram illustrating components of an electronic device according to an embodiment of the present disclosure.
FIG. 3 is a diagram illustrating operations of components included in an electronic device and data transmitted and received between the components, according to an embodiment of the present disclosure.
FIG. 4 is a flowchart of an operation method of an electronic device, according to an embodiment of the present disclosure.
FIG. 5 is a diagram illustrating an operation in which an electronic device sets a privacy mode based on a user input, according to an embodiment of the present disclosure.
FIG. 6 is a diagram illustrating a privacy mode preset for each application, according to an embodiment of the present disclosure.
FIG. 7 is a diagram illustrating an operation in which an electronic device updates an avatar by using a public context.
FIG. 8 is a flowchart illustrating an operation in which an electronic device updates an avatar by using changed user context information, according to an embodiment of the present disclosure.
FIG. 9 is a flowchart illustrating an operation in which an electronic device provides an avatar according to whether there is a change in user context information.

### Mode of the Invention

As terms used in embodiments of the present specification, general terms that are currently widely used are selected by taking into account the functions in the present disclosure, but these terms may vary according to the intention of one of ordinary skill in the art, precedent cases, advent of new technologies, etc. Furthermore, specific terms may be arbitrarily selected by the applicant, and in this case, the meaning of the selected terms will be described in detail in the detailed description of a corresponding embodiment. Thus, the terms used herein should be defined not by simple appellations thereof but based on the meaning of the terms together with the overall description of the present disclosure.

Singular expressions used herein are intended to include plural expressions as well unless the context clearly indicates otherwise. All the terms used herein, which include technical or scientific terms, may have the same meaning that is generally understood by a person of ordinary skill in the art described in the present specification.

Throughout the present disclosure, when a part "includes" or "comprises" an element, unless there is a particular description contrary thereto, it is understood that the part may further include other elements, not excluding the other elements. Furthermore, terms, such as "unit," "module," etc., used herein indicate a unit for processing at least one function or operation, and may be implemented as hardware or software or a combination of hardware and software.

The expression "configured to (or set to)" used herein may be used interchangeably, according to context, with, for example, the expression "suitable for," "having the capacity to," "designed to," "adapted to," "made to," or "capable of". The term "configured to (or set to)" may not necessarily mean only "specifically designed to" in terms of hardware. Instead, the expression "a system configured to" may mean, in some contexts, the system being "capable of", together with other devices or components. For example, the expression "a processor configured to (or set to) perform A, B, and C" may mean a dedicated processor (e.g., an embedded processor) for performing the corresponding operations, or a general-purpose processor (e.g., a central processing unit (CPU) or an application processor (AP)) capable of performing the corresponding operations by executing one or more software programs stored in a memory.

Furthermore, in the present disclosure, it should be understood that when a component is referred to as being "connected" or "coupled" to another component, the component may be directly connected or coupled to the other component, but may also be connected or coupled to the other component via another intervening component therebetween unless there is a particular description contrary thereto.

As used herein, an 'avatar' is a virtual graphical object that is a graphical representation of a user in the real world, and may be, for example, a two- or three-dimensional icon, character, or model. In an embodiment of the present disclosure, an avatar may be as simple as a photo of the user, or may be a graphical object or animation that represents the user's appearance, facial expression, activity, interest, personality, or the like. Avatars may be provided through, for example, a game, a social network service (SNS), a messenger application service, a health application, or an exercise application.

As used herein, 'user context information' refers to information about a user's appearance, situation, or context. In an embodiment of the present disclosure, the user context information may include information about at least one of the user's appearance, facial expression, behavior, health, exercise, location, and situation.

As used herein, a 'privacy mode' is a mode that is set by distinguishing between a public context and a private context in user context information. In an embodiment of the present disclosure, the privacy mode may be set for each application.

An embodiment of the present disclosure will be described more fully hereinafter with reference to the accompanying drawings so that the embodiment may be easily implemented by a person of ordinary skill in the art. However, the present disclosure may be implemented in different forms and should not be construed as being limited to embodiments set forth herein.

Hereinafter, embodiments of the present disclosure are described in detail with reference to the accompanying drawings.

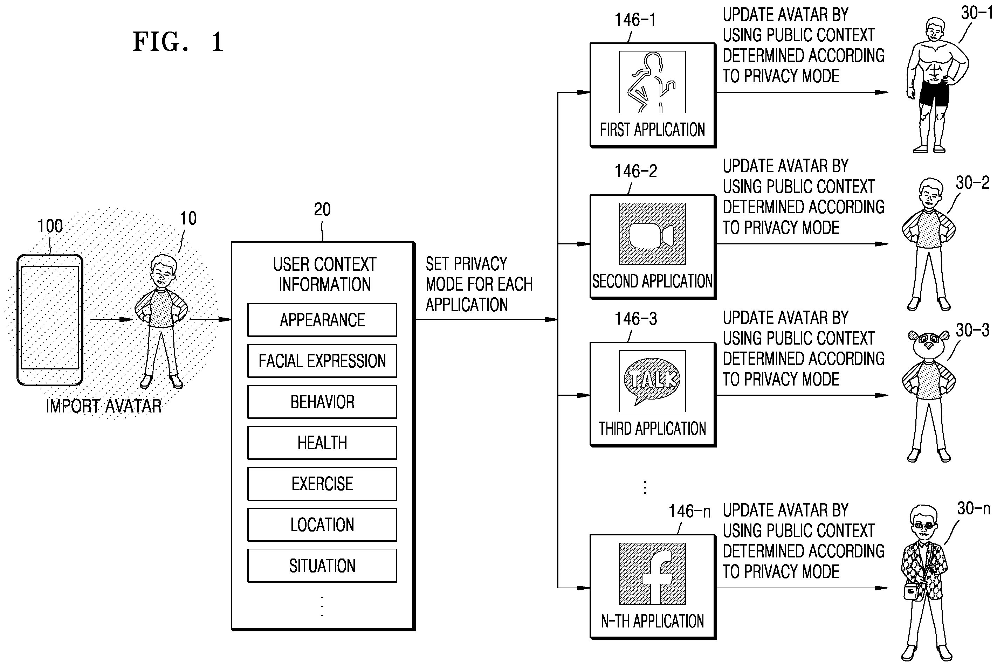

FIG. 1 is a conceptual diagram illustrating an operation in which an electronic device 100 updates an avatar by reflecting user context information 20 therein, according to an embodiment of the present disclosure.

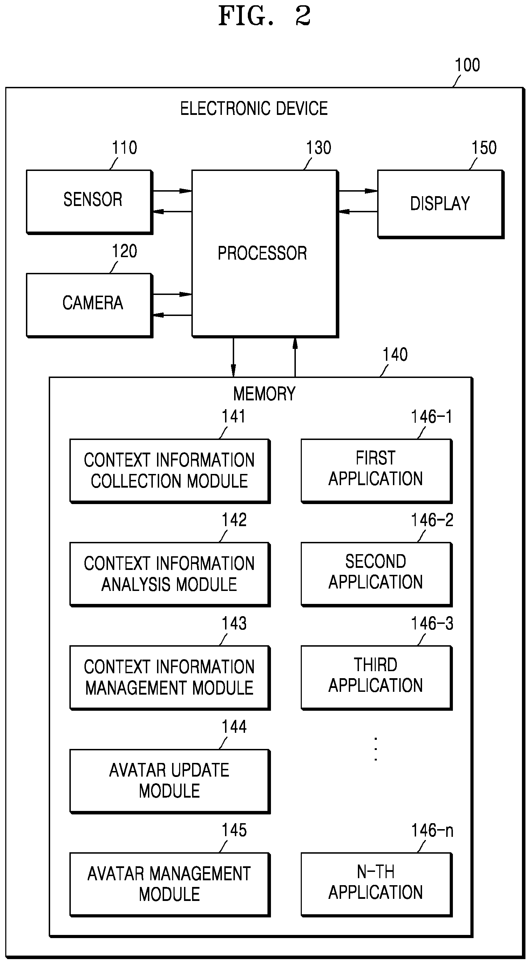

Referring to FIG. 1, the electronic device 100 may obtain an avatar 10 that has been previously generated. In the present disclosure, the 'avatar' 10 is a virtual graphical object that is a graphical representation of a user in the real world, and may be, for example, a two-dimensional (2D) icon or a three-dimensional (3D) model. In an embodiment of the present disclosure, the avatar 10 may be as simple as a photo of the user, or may be a graphical object or animation that represents the user's appearance, facial expression, activity, interest, personality, or the like. In an embodiment of the present disclosure, the avatar 10 may be previously generated by the electronic device 100 and stored in a memory (140 of FIG. 2). The electronic device 100 may obtain the avatar 10 by importing the avatar 10 stored in the memory 140.

The electronic device 100 may obtain user context information 20. In an embodiment of the present disclosure, the 'user context information 20' may include information about at least one of the user's appearance, facial expression, behavior, health, exercise, location, and situation. The electronic device 100 may obtain the user context information via a sensor (110 of FIG. 2) or a camera (120 of FIG. 2). For example, the sensor 110 may include a global positioning system (GPS) sensor or a heartbeat sensor, and the electronic device 100 may obtain location information of the user from the GPS sensor and heart rate information (health status information) of the user from the heartbeat sensor. For example, the electronic device 100 may obtain information about the user's facial expression, body, or clothes being worn by capturing an image of the user via the camera 120. In an embodiment of the present disclosure, the electronic device 100 may also obtain the user context information through usage history of applications 146-1 to 146-n, information input through the applications 146-1 to 146-n, or the like.

The electronic device 100 may set a privacy mode of the user context information 20 for each of the applications 146-1 to 146-n. The electronic device 100 may set a privacy mode by determining whether to publicly disclose the user context information 20 for each of the at least one application 146-1 to 146-n. In an embodiment of the present disclosure, the electronic device 100 may receive a user input for classifying each of pieces of user context information 20 as a public context or a private context for each of the at least one application 146-1 to 146-n, and determine a public context from among the pieces of user context information 20 based on the received user input. For example, the first application 146-1 may be a health application, and the user may determine, for the health application, only information about appearance (e.g., height, weight, etc.), health (e.g., body mass index (BMI), body fat percentage, blood glucose index, heart rate, etc.), and exercise (e.g., number of steps, aerobic exercise, muscle exercise, etc.) among the pieces of user context information 20 as being a public context, and determine the remaining context information, such as facial expression, location, situation, etc., as being a private context. The electronic device 100 may set a privacy mode for the first application 146-1 based on a user input. For example, for the first application 146-1, the electronic device 100 may determine only the information about the appearance, health, and exercise among the pieces of the user context information 20 as being a public context. For example, the second application 146-2 may be a video calling application, and the user may determine, for the video calling application, information about appearance (e.g., height, weight, etc.), facial expression, and behavior among the pieces of user context information 20 as being a public context, and determine the remaining context information, such as health, exercise, location, and situation, as being a private context. The electronic device 100 may set, based on a user input, a privacy mode for the second application 146-2 by determining, for the second application 146-2, information about appearance, facial expression, and behavior among the pieces of user context information 20 as being a public context.

The electronic device 100 of the present disclosure is not limited to determining a privacy mode based on a user input. In an embodiment of the present disclosure, the electronic device 100 may set a privacy mode based on a privacy mode preset established for each of the applications 146-1 to 146-n. The electronic device 100 may obtain preset information that includes the user context information 20 classified as a public context and a private context for each of the applications 146-1 to 146-n, and may set a privacy mode for each of the applications 146-1 to 146-n based on the preset information. For example, the third application 146-3 may be a messenger application, and a privacy mode preset for the messenger application may be preset to include information about appearance excluding a face, behavior, location, and situation as a public context, and information about facial expression, health, and exercise as a private context. The electronic device 100 may obtain privacy mode preset information of the third application 146-3 and, based on the obtained privacy mode preset information, determine only information about the appearance excluding the face and behavior among the pieces of user context information 20 as being a public context. For example, the n-th application 146-n may be an SNS application, and the privacy mode preset for the SNS application may be preset to include information about appearance, facial expression, behavior, and exercise as a public context, and information about health, location, and situation as a private context. The electronic device 100 may obtain privacy mode preset information of the n-th application 146-n and, based on the obtained privacy mode preset information, determine the information about the appearance, facial expression, behavior, and exercise among the pieces of user context information 20 as being a public context.

The electronic device 100 may update the avatar 10 based on a privacy mode set for each of the applications 146-1 to 146-n. The electronic device 100 may change at least one of an appearance, a size, a posture, and a location of the avatar 10 by using the user context information 20 determined as a public context according to the privacy mode set for each of the applications 146-1 to 146-n. In the embodiment illustrated in FIG. 1, in the privacy mode set for the first application 146-1, only information about appearance, health, and exercise are determined as a public context, and the electronic device 100 may obtain a first avatar 30-1 by updating the avatar 10 by using the information about the user's appearance, health, and exercise, which is the public context. For example, in the privacy mode set for the second application 146-2, only information about appearance, facial expression, and behavior are determined as a public context, and the electronic device 100 may obtain a second avatar 30-2 by updating the avatar 10 using the information about the user's appearance, facial expression, and behavior, which is the public context. In the same manner, the electronic device 100 may obtain a third avatar 30-3 to an n-th avatar 30-n by updating the avatar 10 using public contexts determined according to privacy modes set for the third application 146-3 to the n-th application 146-n.

The electronic device 100 may provide one of the updated avatars 30-1 to 30-n via an application being executed among the at least one application 146-1 to 146-n. In an embodiment of the present disclosure, in response to a user input for executing an application being received, the electronic device 100 may import an avatar updated for the application and display the avatar on a display (150 of FIG. 2). For example, when a user input for executing the first application 146-1 is received, the electronic device 100 may display, on the display 150, the first avatar 30-1 updated based on the privacy mode set for the first application 146-1. However, the present disclosure is not limited thereto, and the electronic device 100 may provide an updated avatar to an external device and display the updated avatar via the external device. For example, in a case that the electronic device 100 is a mobile device (e.g., a smartphone), the electronic device 100 may transmit data of an updated avatar to an external device, such as a television (TV), a tablet personal computer (PC), a digital broadcast terminal, an augmented reality device (e.g., smart glasses), or a wearable device (e.g., a smart watch), and display the updated avatar via the external device.

In a case where the avatar 10 is provided through a general application service, avatars having individualized forms are provided according to the purpose of services in the applications 146-1 to 146-n, so the user context information 20 is not properly reflected therein. For example, the avatar 10 provided by a game application (or a game service) does not reflect changes in the user's health status, changes in the user's body (e.g., changes in weight), changes in the user's facial expression, etc., and the avatar provided by a health application does not reflect changes in the user's facial expression, changes in clothes being worn by the user, etc. In addition, even if the avatar 10 provided via the application service reflects the user context information 20, the user may not want to reflect private information that the user does not wish to disclose to the outside world in the avatar 10. For example, the user may not want to reflect changes in the individual's body (e.g., weight gain) in the avatar provided through the n-th application 146-n that is a social network service application. Therefore, in a case that the user context information 20 is reflected in the avatar 10, it is necessary to distinguish between a public context to be disclosed to the outside world and a private context not to be disclosed by taking into account the user's privacy concerns.

The present disclosure is to provide an electronic device 100 and an operation method thereof for updating an avatar by reflecting user context information in order to increase the usability of the avatar and improve the convenience of use.

According to an embodiment of the present disclosure, the electronic device 100 may update the avatar 10 by using only context information determined as public contexts according to privacy modes set for the at least one application 146-1 to 146-n among the pieces of user context information 20, and provide the updated avatars 30-1 to 30-n, thereby improving the usability of the avatars 30-1 to 30-n in various applications such as games, health applications, exercise applications, messenger applications, SNS applications, etc. Furthermore, the electronic device 100 of the present disclosure provides the updated avatars 30-1 to 30-n by reflecting changes in the user context information 20, thereby providing a technical effect of increasing the user's immersion in an avatar and improving usage satisfaction.

The electronic device 100 of the present disclosure provides the different avatars 30-1 to 30-n updated according to the different applications 146-1 to 146-n based on the avatar 10, thereby efficiently managing the generation, storage, modification, and provision of the avatars 30-1 to 30-n. In addition, the electronic device 100 of the present disclosure may provide seamless avatar services through various services (or applications) or various devices by updating the one universal avatar 10 differently according to the at least one application 146-1 to 146-n.

FIG. 2 is a block diagram illustrating components of the electronic device 100 according to an embodiment of the present disclosure.

The electronic device 100 illustrated in FIG. 2 is a device that provides avatar services to a user, and may be configured as, for example, a smartphone, a tablet PC, or an augmented reality device. However, the electronic device 100 is not limited thereto, and may be implemented as a variety of electronic devices, such as a laptop computer, a desktop PC, an e-book terminal, a digital broadcast terminal, a personal digital assistant (PDA), a portable multimedia player (PMP), a navigation device, an MP3 player, a camcorder, an Internet Protocol television (IPTV), a digital television (DTV), a wearable device (e.g. smart watches), etc.

Referring to FIG. 2, the electronic device 100 may include the sensor 110, the camera 120, a processor 130, the memory 140, and the display 150. The sensor 110, the camera 120, the processor 130, the memory 140, and the display 150 may be electrically and/or physically connected to one another.

The components shown in FIG. 2 are only in accordance with an embodiment of the present disclosure, and the components included in the electronic device 100 are not limited to those shown in FIG. 2. The electronic device 100 may not include some of the components shown in FIG. 2, and may further include components not shown in FIG. 2. In an embodiment of the present disclosure, the electronic device 100 may further include a communication interface for performing data communication with an external device or server. The communication interface may include at least one hardware module from among, for example, a Wi-Fi (WiFi), a Wi-Fi Direct (WFD) communication module, a Bluetooth communication module, a Bluetooth Low Energy (BLE) communication module, a near field communication (NFC) unit, a ZigBee communication module, an Ant+ communication module, a microwave (µWave) communication module, or a mobile communication module (e.g., 3rd generation (3G), 4th generation (4G) long-term evolution (LTE), 5th generation (5G) millimeter wave (mmWave), or 5G new radio (NR)).

In an embodiment of the present disclosure, the electronic device 100 may further include an input interface for receiving a user input. The input interface may include, for example, a keyboard, a mouse, a touch screen, or a voice input device (e.g., a microphone), and may include other input devices that are obvious to one of ordinary skill in the art. In an embodiment of the present disclosure, the electronic device 100 may be configured as a portable device and may further include a battery for supplying driving power to the sensor 110, the camera 120, the processor 130, and the display 150.

The sensor 110 may include at least one sensor. For example, the sensor 110 may include at least one of a GPS sensor, an acceleration sensor, a gyroscope sensor, an inertial measurement unit (IMU) sensor, a motion sensor, a heartbeat sensor, a temperature sensor, a humidity sensor, or a barometric pressure sensor. The sensor 110 may provide the processor 130 with sensing information detected and obtained while the electronic device 100 is being used by the user. For example, a GPS sensor may provide location information of the user to the processor 130, and a heartbeat sensor may provide information about the user's heart rate to the processor 130.

The camera 120 is configured to obtain an image by capturing an image of a real-world space or a user. The camera 120 may include a lens module, an image sensor, and an image processing module. The camera 120 may obtain a still image or video of an object via an image sensor (e.g., a complementary metal-oxide-semiconductor (CMOS) or charge-coupled device (CCD) sensor). The image processing module may process the still image or video obtained via the image sensor, extract necessary information, and transmit the extracted information to the processor 130. In an embodiment of the present disclosure, by capturing an image of the user, the camera 120 may provide the processor 130 with an image of the user's facial expression or appearance such as the user's body, clothes being worn, etc.

The processor 130 may execute one or more instructions of a program stored in the memory 140. The processor 130 may be composed of hardware components that perform arithmetic, logic, and input/output (I/O) operations, and signal processing. For example, the processor 130 may consist of at least one of, for example, a CPU, a microprocessor, a graphics processing unit (GPU), application specific integrated circuits (ASICs), digital signal Processors (DSPs), digital signal processing devices (DSPDs), programmable logic devices (PLDs), and field programmable gate arrays (FPGAs), but is not limited thereto.

In FIG. 2, the processor 130 is shown as a single element, but is not limited thereto. In an embodiment, the processor 130 may be configured as a single processor or a plurality of processors.

In an embodiment of the present disclosure, the processor 140 may include an artificial intelligence (AI) processor that performs Al training. In this case, the Al processor may update an avatar by using a learning network model of an Al system. The Al processor may be manufactured in the form of a dedicated hardware chip for Al, or may be manufactured as a part of an existing general-purpose processor (e.g., a CPU or AP) or a dedicated graphics processor (e.g., a GPU) and mounted on the processor 130 within the electronic device 100.

For example, the memory 140 may include at least one type of storage medium among a flash memory-type memory, a hard disk-type memory, a multimedia card micro-type memory, a card-type memory (e.g., a Secure Digital (SD) card or an eXtreme Digital (XD) memory), random access memory (RAM), static RAM (SRAM), read-only memory (ROM), electrically erasable programmable ROM (EEPROM), PROM, or an optical disc. In an embodiment of the present disclosure, the memory 140 may be implemented as a web storage or cloud server that is accessible over a network and performs a storage function. In this case, the electronic device 100 may communicatively connect to the web storage or cloud server via the communication interface and perform data transmission and reception.

The memory 140 may store instructions or program code for causing the electronic device 100 to perform an operation of updating an avatar based on user context information. In an embodiment of the present disclosure, the memory 140 may store software including at least one of instructions, algorithms, data structures, program code, and application programs readable by the processor 130. The instructions, algorithms, data structures, and program code stored in the memory 140 may be implemented in programming or scripting languages such as C, C++, Java, assembler, etc.

The memory 140 may store instructions, algorithms, data structures, or program code related to a context information collection module 141, a context information analysis module 142, a context information management module 143, an avatar update module 144, an avatar management module 145, and applications 146-1 to 146-n. A 'module' included in the memory 140 refers to a unit for processing functions or operations performed by the processor 130, and may be implemented as software such as instructions, algorithms, data structures, or program code.

In the following embodiments, the processor 130 may be implemented by executing instructions or program code stored in the memory 140.

The context information collection module 141 may be composed of instructions or program code related to functions and/or operations of obtaining user context information from the sensor 110, the camera 120, or the applications 146-1 to 146-n, and storing the obtained user context information. The processor 130 may obtain user context information from the sensor 110 or the camera 120 by executing the instructions or program code related to the context information collection module 141. In the present disclosure, 'user context information' may include information about at least one of the user's appearance, facial expression, behavior, health, exercise, location, and situation. For example, the processor 130 may obtain location information of the user from a GPS sensor, and heart rate information of the user from a heartbeat sensor. For example, the processor 130 may obtain step count information or aerobic exercise information of the user from an acceleration sensor and a gyroscope sensor. For example, the processor 130 may obtain information about the user's facial expression, body, or clothes being worn from an image or video data captured by the camera 120. In an embodiment of the present disclosure, the processor 130 may obtain user context information through usage history of the applications 146-1 to 146-n, information input through the applications 146-1 to 146-n, or the like.

The context information analysis module 142 is composed of instructions or program code related to functions and/or operations of analyzing the obtained user context information and classifying it into basic context information and combined context information. 'Basic context information' refers to a context that may be identified only from raw data among pieces of user context information obtained from the sensor 110, the camera 120, or the applications 146-1 to 146-n. For example, the basic context information may include heart rate information obtained from a heartbeat sensor, information about the user's facial expression or behavior recognized from an image captured by the camera 120. 'Combined context information' refers to a context that may be identified through the combination of a plurality of pieces of user context information. For example, the combined context information may include information about the user's current state and situation (e.g., exercising, driving, sleeping, emotions, etc.) The processor 130 may analyze user context information and classify the user context information into basic context information and combined context information based on a result of the analysis by executing the instructions or program code related to the context information analysis module 142.

In an embodiment of the present disclosure, the processor 130 may identify, based on the result of the analysis of the user context information, user context information that is applicable to an avatar among the basic context information and the combined context information.

The context information management module 143 is composed of instructions or program code related to functions and/or operations of registering at least one piece of user context information to be applied to the avatar among a plurality of pieces of user context information, and setting a privacy mode that determines whether to publicly disclose each of the registered at least one piece of user context information. The processor 130 may select at least one piece of user context information from among the plurality of pieces of user context information identified as applicable to the avatar by the context information analysis module 142, and register the selected at least one piece of user context information as avatar management context information by executing the instructions or program code related to the context information management module 143. Here, the 'registering' step (or operation) is an operation of selecting at least one piece of user context information to be applied to the avatar for each of the applications 146-1 to 146-n, and mapping the selected at least one piece of user context information according to each of the applications 146-1 to 146-n. User context information to be registered may be preset for each of the applications 146-1 to 146-n. For example, in a case that the user context information includes information about the user's appearance, facial expression, behavior, health, exercise, location, and situation, and the first application 146-1 is a health application, the processor 130 may select only information about the appearance, behavior, health, and exercise and register the selected information with the first application 146-1 as avatar management context information. For example, in a case that the second application 146-2 is a teleconferencing application, the processor 130 may select only information about the appearance, facial expression, behavior, and location and register the selected information with the second application 146-2 as avatar management context information. For example, in a case that the third application 146-3 is a messenger application, the processor 130 may select only information about the appearance, behavior, location, and situation and register the selected information with the third application 146-3 as avatar management context information.

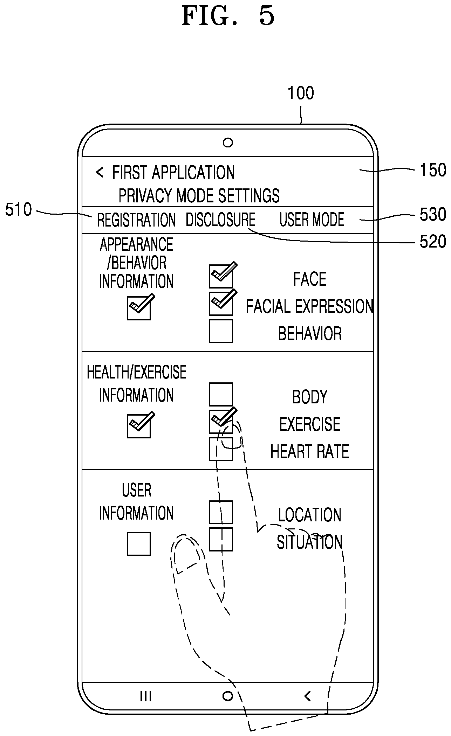

The processor 130 may set a privacy mode by determining whether to publicly disclose each piece of user context information registered for each of the applications 146-1 to 146-n by executing the instructions or program code related to the context information management module 143. Here, the 'privacy mode' is a mode set by distinguishing between a public context and a private context among pieces of user context information registered for each of the applications 146-1 to 146-n. In an embodiment of the present disclosure, the electronic device 100 may further include a user input interface that receives a user input for determining whether to publicly disclose or keep private each piece of user context information registered for each of the applications 146-1 to 146-n. For example, the display 150 may include a touch screen, and the touch screen may receive a user's touch input for determining whether to publicly disclose or keep private via a user interface (UI) regarding the user context information displayed on the display 150. The processor 130 may determine a public context from the registered user context information based on the received user's touch input. For example, the touch screen may receive a touch input for determining a face and a facial expression in the appearance, a height and a weight in the health, and exercise time and exercise type in the exercise as a public context, wherein the appearance, the health, and the exercise are user context information registered for the first application 146-1 which is a health application, and the processor 130 may determine the face, facial expression, height, weight, exercise time, and exercise type as the public context based on the touch input. A specific embodiment in which the electronic device 100 sets a privacy mode for each of the applications 146-1 to 146-n based on the touch input is described in detail with reference to FIG. 5.

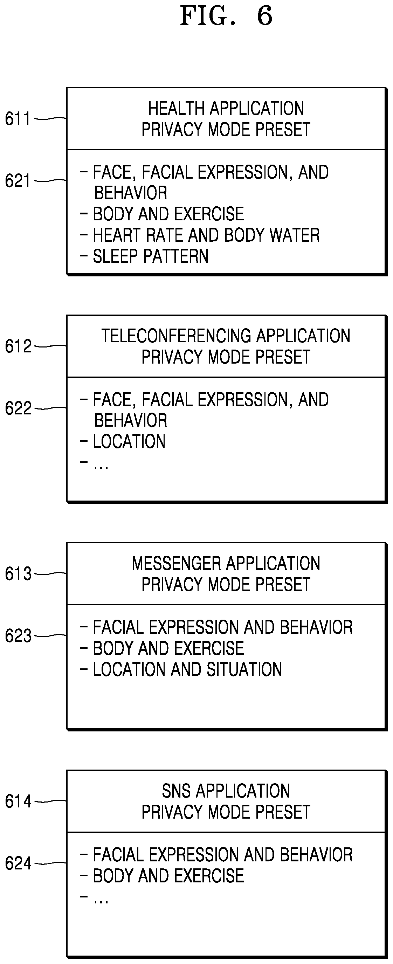

However, the present disclosure is not limited thereto, and a privacy mode regarding whether the user context information is public or private may be preset for each of the applications 146-1 to 146-n. In this case, the processor 130 may obtain privacy mode preset information that is preset for each of the applications 146-1 to 146-n , and determine a public context and a private context based on the obtained privacy mode preset information. For example, privacy mode preset information of the second application 146-2, which is a teleconferencing application, may include information about the face and facial expression in the appearance, a current location in the location, and the behavior as a public context, and the remaining user context information as a private context. The processor 130 may obtain privacy mode preset information from the second application 146-2 and, based on the obtained privacy mode preset information, determine information about the face, facial expression, current location, and behavior among the pieces of user context information as a public context. A specific embodiment in which the electronic device 100 determines a public context and a private context based on privacy mode preset information for each of the applications 146-1 to 146-n is described in detail with reference to FIG. 6.

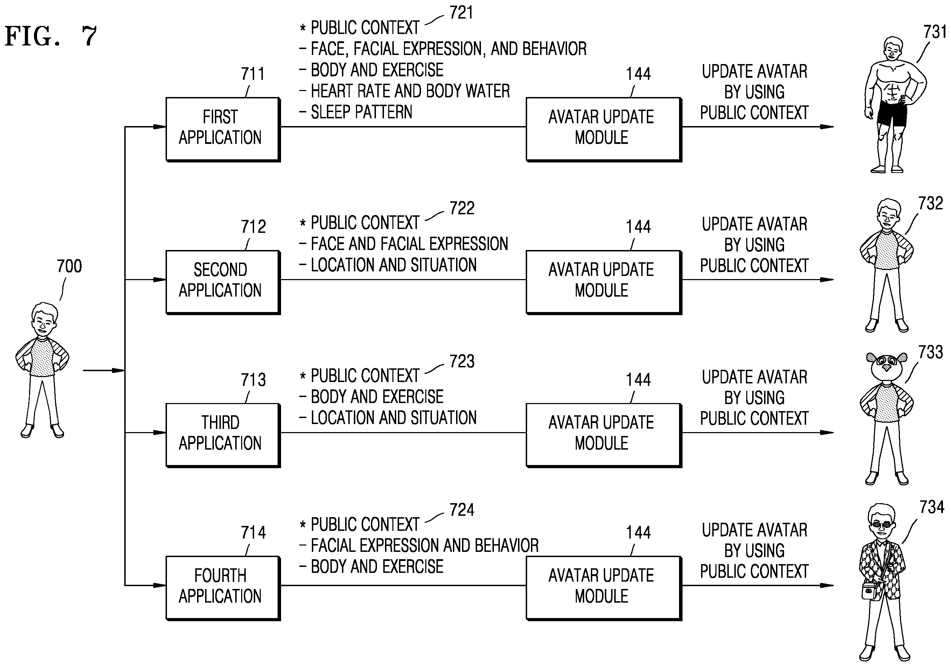

The avatar update module 144 is composed of instructions or program code related to a function and/or an operation of updating an avatar based on a determined privacy mode. The processor 130 may update the avatar using user context information determined as a public context according to a privacy mode by executing the instructions or program code related to the avatar update module 144. In an embodiment of the present disclosure, the processor 130 may change at least one of an appearance, a size, a posture, and a location of the avatar by using a public context determined according to a privacy mode set for each of the applications 146-1 to 146-n. A specific embodiment in which the electronic device 100 updates an avatar by using a public context determined according to a privacy mode is described in detail with reference to FIG. 7.

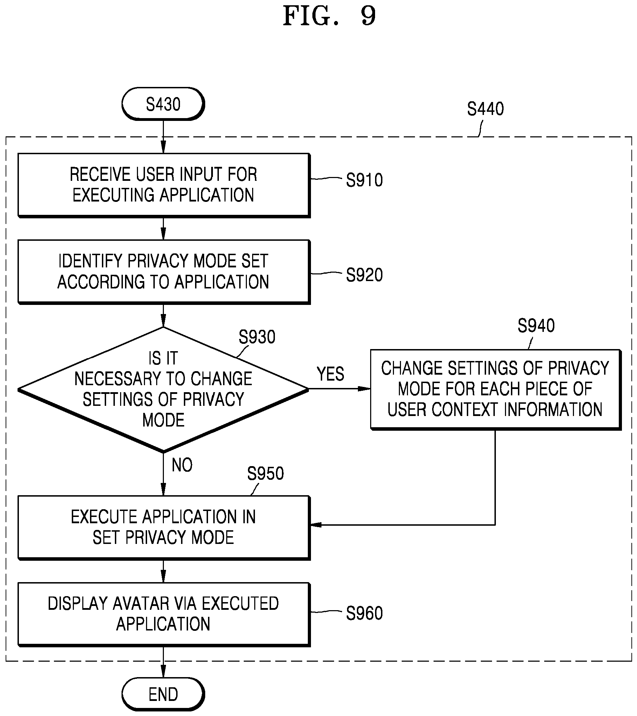

The avatar management module 145 is composed of instructions or program code related to functions and/or operations of managing a privacy mode for each of the applications 146-1 to 146-n and determining whether a change in the privacy mode is needed for each of the applications 146-1 to 146-n. The processor 130 may change a public context determined according to a privacy mode for each of the applications 146-1 to 146-n to a private context, or change a private context to a public context by executing instructions or program code related to the avatar management module 145. In an embodiment of the present disclosure, the processor 130 may identify a privacy mode set according to each of the applications 146-1 to 146-n in response to a user input for executing the corresponding application being received, and determine whether it is necessary to change settings of the identified privacy mode. For example, in a privacy mode for the third application 146-3, which is a messenger application, only context information about the appearance excluding the face and behavior, is determined as a public context, but the user may want to change information about the current location and situation (e.g., driving or exercising) to a public context. In this case, the processor 130 may receive a user input for changing settings of the privacy mode, and change the settings of the privacy mode based on the received user input. For example, the processor 130 may change a private context (e.g., the current location and situation) to a public context based on the user input. A specific embodiment in which the electronic device 100 changes settings of a privacy mode is described in detail with reference to FIG. 9.

The applications 146-1 to 146-n are applications executed by the electronic device 100 to provide specific services or perform tasks. Because the applications 146-1 to 146-n are obvious to one of ordinary skill in the art, detailed descriptions thereof are omitted. The applications 146-1 to 146-n may be a plurality of applications as illustrated in FIG. 2, but are not limited thereto. For example, the first application 146-1 may be a health application, the second application 146-2 may be a teleconferencing application, the third application 146-3 may be a messenger application, and the n-th application 146-n may be an SNS application. However, the present disclosure is not limited thereto, and the first application 146-1 to the n-th application 146-n may be any application known in the art.

The display 150 is configured to display the avatar via the applications 146-1 to 146-n being executed. The display 150 may display an avatar updated based on a public context determined according to a privacy mode for each of the applications 146-1 to 146-n.

The display 150 may be configured as a physical device including, for example, at least one of a liquid crystal display (LCD), a thin film transistor (TFT)-LCD, an organic light-emitting diode (OLED) display, a flexible display, a 3D display, and an electrophoretic display. In an embodiment of the present disclosure, the display 150 may be configured as a touch screen including a touch interface. When the display 150 is configured as a touch screen, the display 150 may be a component integrated with a user input interface configured as a touch panel. However, the present disclosure is not limited thereto, and in a case that the electronic device 100 is an eyeglass-shaped AR device such as AR glasses, the display 150 may include a lens, a waveguide, and an optical engine (e.g., a projector).

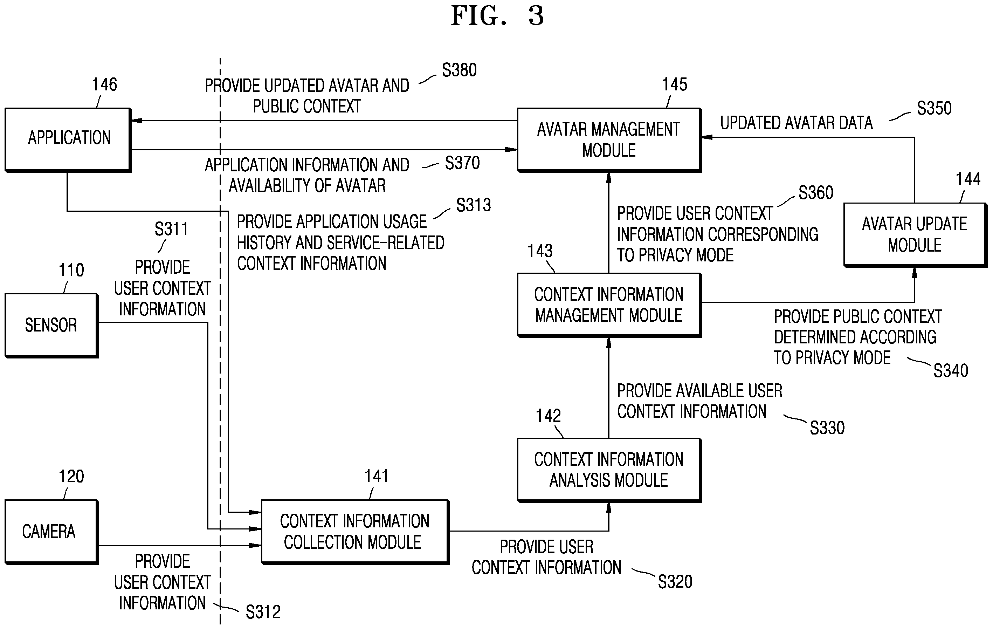

FIG. 3 is a diagram illustrating operations of components included in the electronic device 100 and data transmitted and received between the components, according to an embodiment of the present disclosure.

Referring to FIG. 3, the operation of each of the sensor 110, the camera 120, the context information collection module 141, the context information analysis module 142, the context information management module 143, the avatar update module 144, the avatar management module 145, and an application 146 and data transmitted and received therebetween are illustrated. The sensor 110 and camera 120 illustrated in FIG. 3 are hardware-based devices, and the context information collection module 141, the context information analysis module 142, the context information management module 143, the avatar update module 144, the avatar management module 145, and the application 146 may be units of operation implemented as software such as instructions, algorithms, data structures, or program code. Arrows shown in FIG. 3 indicate movement, transmission, and reception of data between the operation units. The numbers attached to the English letter S in S320 to S380 are used to identify the order of the movement, transmission, and reception of data. However, the numbers attached to the English letter S in S311 to S313 are used to distinguish operations and do not indicate the order.

The sensor 110, the camera 120, the context information collection module 141, the context information analysis module 142, the context information management module 143, the avatar update module 144, the avatar management module 145, and the application 146 illustrated in FIG. 3 each have the same configuration as that of their counterparts in FIG. 2, and therefore, redundant descriptions are omitted.

The sensor 110 and the camera 120 provide user context information to the context information collection module 141 (S311 and S312). For example, the sensor 110 may include a GPS sensor and provide location information of the user obtained via the GPS sensor to the context information collection module 141. For example, the sensor 110 may include a heartbeat sensor and provide heart rate information of the user obtained using the heartbeat sensor to the context information collection module 141. For example, the camera 120 may capture an image or video data of the user's face or body and provide the obtained image or video data to the context information collection module 141.

The application 146 provides an application usage history and service-related context information to the context information collection module 141 (S313). In an embodiment of the present disclosure, the application 146 may provide information, such as information input by the user during execution of the application 146, to the context information collection module 141.

The context information collection module 141 transmits the obtained user context information to the context information analysis module 142 (S320).

The context information analysis module 142 may analyze the obtained user context information and identify available user context information that may be applied to an avatar based on a result of the analysis. The context information analysis module 142 provides the identified user context information to the context information management module 143 (S330).

The context information management module 143 may register at least one piece of user context information to be applied to the avatar for each application 146 among pieces of the available user context information, and set a privacy mode by determining whether to publicly disclose each of the at least one piece of user context information registered for each application 146. The context information management module 143 provides user context information, which is determined as a public context according to the privacy mode, to the avatar update module 144 (S340).

The avatar update module 144 may update at least one of the appearance, size, posture, and location of the avatar by using the public context obtained from the context information management module 143. The avatar update module 144 provides data of an updated avatar to the avatar management module 145 (S350).

The avatar management module 145 receives the user context information corresponding to the privacy mode from the context information management module 143 (S360). The context information management module 143 may provide the avatar management module 145 with a privacy mode for each application 146 and user context information determined as a public context or a private context according to the privacy mode.

The avatar management module 145 obtains the data of the updated avatar, and receives application information and a query about availability of the avatar from the application 146 being executed (S370). In an embodiment of the present disclosure, the application 146 may provide the avatar management module 145 with identification information of the application 146 and information regarding privacy mode preset set for each application 146.

The avatar management module 145 may identify the application 146 currently being executed based on the received application information, identify user context information available to the identified application 146, and identify user context information determined as a public context according to a privacy mode set for the application 146. In an embodiment of the present disclosure, the avatar management module 145 may identify a public context among pieces of user context information based on privacy mode preset information of the application 146. The avatar management module 145 provides the avatar updated by using the identified public context to the application 146 (S380). In operation S380, the avatar management module 145 may provide the public context together with the updated avatar to the application 146.

The application 146 may display the updated avatar obtained from the avatar management module 145 on the display (150 of FIG. 2).

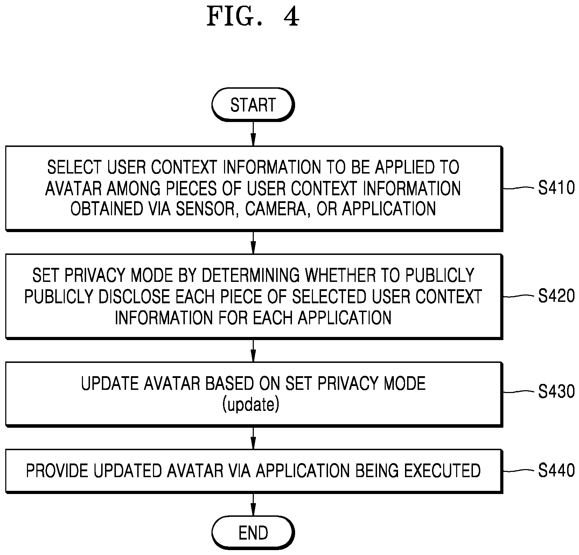

FIG. 4 is a flowchart of an operation method of the electronic device 100, according to an embodiment of the present disclosure.

In operation S410, the electronic device 100 selects user context information to be applied to an avatar among pieces of user context information obtained via a sensor, a camera, or an application. In the present disclosure, 'user context information' may include information about at least one of a user's appearance, facial expression, behavior, health, exercise, location, and situation. For example, the sensor may include a GPS sensor, and the electronic device 100 may obtain location information of the user from the GPS sensor. For example, the sensor may include a heartbeat sensor, and the electronic device 100 may obtain heart rate information of the user from the heartbeat sensor. For example, the electronic device 100 may obtain information about the user's facial expression, body, or clothes being worn from an image or video data captured by the camera.

In an embodiment of the present disclosure, the electronic device 100 may obtain user context information through usage history of the application, information input through the application, or the like.

The electronic device 100 may select user context information to be applied to the avatar from among the obtained pieces of user context information. In an embodiment of the present disclosure, the electronic device 100 may select at least one piece of user context information applicable to the avatar from among the obtained plurality of pieces of user context information, and register the selected at least one piece of user context information for each application. Here, the 'registering' step (or operation) is an operation of selecting at least one piece of user context information to be applied to the avatar for each application, and mapping the selected at least one piece of user context information according to the application.

In operation S420, the electronic device 100 sets a privacy mode by determining whether to publicly disclose each piece of the selected user context information for each application. As used herein, a 'privacy mode' is a mode that is set by distinguishing between a public context and a private context among pieces of user context information registered for each application. In an embodiment of the present disclosure, the electronic device 100 may receive a user input for determining whether to publicly disclose or keep private each piece of user context information registered for each application. For example, the electronic device 100 may include a touch screen and may receive a user's touch input for determining whether to publicly disclose or keep private user context information via a UI for the user context information displayed on the touch screen. The electronic device 100 may set a privacy mode for each application by determining a public context among the pieces of registered user context information based on the received user's touch input.

In an embodiment of the present disclosure, a privacy mode regarding whether user context information is public or private may be preset for each application. The electronic device 100 may obtain privacy mode preset information that is preset for each application, and determine a public context and a private context based on the obtained privacy mode preset information.

In operation S430, the electronic device 100 updates the avatar based on the set privacy mode. The electronic device 100 may update the avatar by using user context information determined as a public context according to the privacy mode. In an embodiment of the present disclosure, the electronic device 100 may change at least one of an appearance, a size, a posture, and a location of the avatar by using a public context determined according to a privacy mode set for each application.

In operation S440, the electronic device 100 provides the updated avatar via an application being executed. In response to a user input for executing an application being received, the electronic device 100 may provide data of the updated avatar to the application and display the updated avatar via the executed application.

FIG. 5 is a diagram illustrating an operation in which the electronic device 100 sets a privacy mode based on a user input, according to an embodiment of the present disclosure.

Referring to FIG. 5, the electronic device 100 may display a graphic UI for setting a privacy mode of an application on the display 150. In the embodiment illustrated in FIG. 5, a privacy mode settings UI of a first application, which is displayed on the display 150, may include a registration UI 510 for registering at least one of appearance/behavior information, health/exercise information, and user situation information among pieces of user context information, a disclosure UI 520 for determining whether to publicly disclose each of pieces of user context information included in each of the registered appearance/behavior information, health/exercise information, and user situation information (e.g., face, facial expression, and behavior included in the appearance/behavior information, body, exercise, and heart rate included in the health/exercise information, and location, situation, etc. included in the user situation information), and a user context information UI 530 for providing information about public or private user context information.

In an embodiment of the present disclosure, the display 150 may further include a touch screen for receiving a touch input from the user. The electronic device 100 may receive, via a touch screen, a user's touch input for registering at least one piece of context information among the pieces of user context information applied to the first application. In the embodiment illustrated in FIG. 5, the user performs a touch to register appearance/behavior information and health/exercise information among the pieces of user context information included in the registration UI 510, and the electronic device 100 may display a check UI (√) to indicate selection for the appearance/behavior information and the health/exercise information selected by the user's touch input. The processor (130 of FIG. 2) of the electronic device 100 may register context information corresponding to the appearance/behavior information and the health/exercise information selected by the user's touch input from among the pieces of user context information as context information to be applied to the first application.

The electronic device 100 may receive, via the touch screen, a user input for classifying each of the pieces of user context information registered with the first application as a public context or a private context. In the embodiment illustrated in FIG. 5, the electronic device 100 may receive, via the disclosure UI 520, a user's touch input for determining, as a public context, face and facial expression information from information about the face, facial expression, and behavior included in the appearance/behavior information registered with the first application. In addition, the electronic device 100 may receive a user's touch input for determining, as a public context, only exercise information from information about the body, exercise, and heart rate included in the health/exercise information registered with the first application. The processor 130 of the electronic device 100 may determine only the information about face, facial expression, and exercise selected according to the user's touch input as a public context, and determine unselected information, such as information about the behavior, body, heart rate, location, and situation, as a private context.

The processor 130 of the electronic device 100 may set a privacy mode applied to the first application based on a user input, and update an avatar by using only information determined as a public context among the pieces of user context information according to the set privacy mode.

FIG. 6 is a diagram illustrating a privacy mode preset for each application, according to an embodiment of the present disclosure.

In the present disclosure, a 'privacy mode preset' may include information about whether user context information applied to an avatar is public or private for each of applications 611 to 614. Referring to FIG. 6, a privacy mode preset may be set for each of the first application 611 to the fourth application 614. For example, the first application 611 may be a health application, and a privacy mode preset of the first application 611 may include information about face, facial expression, behavior, body, exercise, heart rate, body water, and sleep pattern as a public context 621 among pieces of user context information. The privacy mode preset of the first application 611 may include the remaining user context information as a private context, other than the information about the face, facial expression, behavior, body, exercise, heart rate, body water, and sleep pattern determined as the public context 621.

For example, the second application 612 may be a teleconferencing application, and the privacy mode preset of the second application 612 may include information about the face, facial expression, behavior, and location as a public context 622 among the pieces of user context information. For example, a privacy mode preset of the third application 613, which is a messenger application, may include information about the facial expression, behavior, body, exercise, location, and situation as a public context 623 among the pieces of user context information, and a privacy mode preset of the fourth application 614, which is an SNS application, may include information about the facial expression, behavior, body, and exercise as a public context 624 among the pieces of user context information.

Information about a privacy mode preset is included in each of the first application 611 to the fourth application 614, and the avatar management module (145 of FIGS. 2 and 3) may obtain and store the information about the privacy mode preset from each of the first application 611 to the fourth application 614. The public contexts 621 to 624 respectively included in the privacy mode presets of the first application 611 to the fourth application 614 are examples and are not limited to those illustrated and described in FIG. 6.

The processor (130 of FIG. 2) of the electronic device 100 may obtain a privacy mode preset of an application being executed among the first application 611 to the fourth application 614, and identify a corresponding one of the public contexts 621 to 624 included in the obtained privacy mode preset among the pieces of user context information. The processor 130 may update an avatar by using the identified public context.

FIG. 7 is a diagram illustrating an operation in which the electronic device 100 updates an avatar 700 by using a public context.

Referring to FIG. 7, the electronic device 100 may update the avatar 700 by using public contexts 721 to 724 determined according to a privacy mode set for each of applications 711 to 714. The processor (130 of FIG. 2) of the electronic device 100 may change at least one of an appearance, a size, a posture, and a location of the avatar 700 using the public contexts 721 to 724 respectively determined according to the applications 711 to 714 by executing instructions or program code of the avatar update module 144. The processor 130 may provide avatars 731 to 734 updated according to the application 711 to 714 being executed.

In the embodiment illustrated in FIG. 7, the first public context 721 determined by a privacy mode set for the first application 711 includes information about face, facial expression, behavior, body, exercise, heart rate, body water, and sleep pattern, and the processor 130 may update the avatar 700 by using the user context information included in the first public context 721, and obtain the first avatar 731 as a result of the updating. Through the updating, the user's face, facial expression, behavior, and body, etc., in the first public context 721 may be reflected in an appearance of the first avatar 731, and the exercise or heart rate information in the first public context 721 may be reflected in a size and a posture of the first avatar 731.

For example, the second public context 722 determined by a privacy mode set for the second application 712 may include information about the face, facial expression, location, and situation, and the processor 130 may update the avatar 700 by using the user context information included in the second public context 722, and obtain the second avatar 732 as a result of the updating. Through the updating, the user's face or facial expression in the second public context 722 may be reflected in a facial shape of the second avatar 732, and the location and situation in the second public context 722 may be reflected in a location and posture of the second avatar 732. For example, the third public context 723 determined by a privacy mode set for the third application 713 may include information about the body, behavior, location, and situation, and the processor 130 may update the avatar 700 by using the user context information included in the third public context 723, and obtain the third avatar 733 as a result of the updating. Unlike the second public context 722, the third public context 723 determines information about the face and facial expression as a private context, so the user's face and facial expression are not reflected in a facial shape of the third avatar 733. Instead, a face of the third avatar 733 may be replaced with a face of a character image (e.g., a face of a bear character).

For example, the fourth avatar 734 may be obtained by updating the avatar 700 to reflect the fourth public context 724 including information about the facial expression, behavior, body, and exercise. In the embodiment illustrated in FIG. 7, the fourth avatar 734 may be updated by reflecting information about the body, including information about accessories being worn (e.g., sunglasses) and clothes being worn.

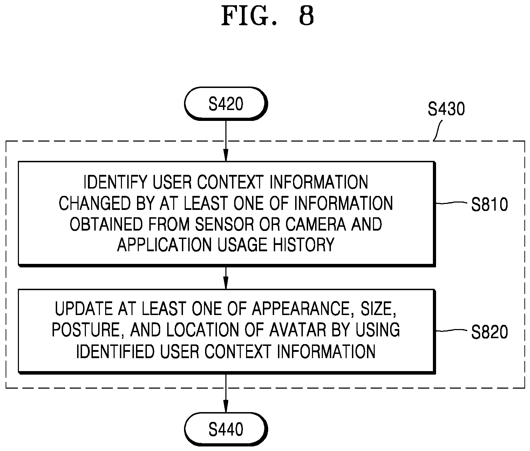

FIG. 8 is a flowchart illustrating an operation in which the electronic device 100 updates an avatar by using changed user context information, according to an embodiment of the present disclosure.

Operations S810 and S820 illustrated in FIG. 8 are detailed operations of operation S430 illustrated in FIG. 4. Operation S810 of FIG. 8 may be performed after operation S420 of FIG. 4 is performed. Operation S440 of FIG. 4 may be performed after operation S820 of FIG. 8 is performed.

In operation S810, the electronic device 100 identifies user context information changed by at least one of information obtained from the sensor (110 of FIG. 2) or the camera (120 of FIG. 2) and usage history information of an application. In an embodiment of the present disclosure, the electronic device 100 may identify changed user context information among pieces of user context information determined as a public context according to a privacy mode. For example, the processor (130 of FIG. 2) of the electronic device 100 may identify changed location information of the user from a GPS sensor, or may identify a changed numerical value of the user's heart rate from a heartbeat sensor. For example, the processor 130 may identify changes in the user's facial expression from an image captured by the camera 120. In an embodiment of the present disclosure, the processor 130 may identify information about clothes being worn by the user from information input through an SNS application, e.g., an uploaded photo, or identify changed location information of the user from text entered through the application.

In operation S820, the electronic device 100 updates at least one of an appearance, a size, a posture, and a location of the avatar by using the identified user context information. In an embodiment of the present disclosure, the processor 130 may update the avatar by reflecting the changed user context information. For example, when the changed location information of the user is identified from a GPS sensor, the processor 130 may update a location of the avatar. For example, when information about changes in clothes worn by the user is identified via an SNS application, the processor 130 may update the appearance of the avatar by changing clothes on the avatar.

In the embodiment illustrated in FIG. 8, the electronic device 100 updates the avatar by reflecting changed user context information in real time, thereby providing a technical effect of immersing the user in the avatar in real time and enhancing user satisfaction.

FIG. 9 is a flowchart illustrating an operation in in which the electronic device 100 provides an avatar according to whether there is a change in user context information.

Operations S910 to S960 illustrated in FIG. 9 are detailed operations of operation S440 illustrated in FIG. 4. Operation S910 of FIG. 9 may be performed after operation S430 of FIG. 4 is performed.

In operation S910, the electronic device 100 receives a user input for executing an application. In an embodiment of the present disclosure, the electronic device 100 may receive a user's touch input for touching an icon representing an application.

In operation S920, the electronic device 100 identifies a privacy mode set according to the application. In an embodiment of the present disclosure, the processor (130 of FIG. 2) of the electronic device 100 may obtain information about a privacy mode from the application, or obtain information about a privacy mode set for the application being executed from the avatar management module (145 of FIGS. 2 and 3). The privacy mode set according to the application may include information about a public context among a plurality of pieces of user context information obtained by the electronic device 100.

In operation S930, the electronic device 100 determines whether it is necessary to change settings of the privacy mode. In an embodiment of the present disclosure, the electronic device 100 may determine that it is necessary to change the settings of the privacy mode when changed user context information is identified among the pieces of user context information, or when a user request for changing a determination as to whether to publicly disclose or keep private the user context information is input.

In a case that it is determined that it is necessary to change the settings of the privacy mode (operation S940), the electronic device 100 changes the settings of the privacy mode for each piece of user context information. The processor 130 of the electronic device 100 may change the settings of the privacy mode by changing a determination as to whether to publicly disclose or keep private each piece of user context information. In an embodiment of the present disclosure, the electronic device 100 includes a user input interface (e.g., a touch screen) that receives a user input (e.g., a touch input) for changing a public or private setting for each piece of user context information, and the processor 130 may change the settings of the privacy mode by changing whether to publicly disclose each piece of user context information based on the received user input.

In a case that it is determined that it is not necessary to change the settings of the privacy mode or when the settings of the privacy mode have already been changed (operation S950), the electronic device 100 executes the application in the set privacy mode.

In operation S960, the electronic device 100 displays an avatar via the executed application. The processor 130 of the electronic device 100 may display, on the display (150 of FIG. 2), the avatar updated by the settings of the privacy mode.

Even when the public context is already determined according to the privacy mode set according to the application, the user may want to change the public context to a private context, or a private context back to a public context. For example, in a privacy mode of an SNS application, information such as height, weight, etc. among body information of the user is determined as a private context, but when the user has recently performed exercise to manage his or her body shape, the user may want to show off his or her body profile picture to other users. The electronic device 100 according to the embodiment illustrated in FIG. 9 may be able to immediately respond to a user's request by, when the application is executed, determining whether it is necessary to change the settings of the privacy mode according to the application, and when necessary, changing setting information of user context information that is public or private based on a user input, thereby improving user convenience and satisfaction.

According to an aspect of the present disclosure, an electronic device for providing an avatar is provided. According to an embodiment of the present disclosure, the electronic device may include a camera, at least one sensor, a memory storing at least one instruction, and at least one processor configured to execute the at least one instruction. The at least one processor may be configured to select user context information to be applied to the avatar from among pieces of user context information obtained via the at least one sensor, the camera, or applications. The at least one processor may be configured to set a privacy mode by determining whether to publicly disclose each piece of the selected user context information for each of the applications. The at least one processor may be configured to update the avatar based on the set privacy mode. The at least one processor may be configured to provide an updated avatar via an application being executed.

In an embodiment of the present disclosure, the user context information may include information about at least one of a user's appearance, facial expression, behavior, health, exercise, location, and situation.

In an embodiment of the present disclosure, the at least one processor may be configured to register the selected user context information as avatar management context information for each of the applications.

In an embodiment of the present disclosure, the electronic device may further include a user input interface for receiving a user input for determining whether to publicly disclose or keep private each piece of the user context information for each of the applications. The at least one processor may be configured to determine a public context from the selected user context information based on the user input received via the user input interface.

In an embodiment of the present disclosure, the at least one processor may be configured to obtain, for each of the applications, preset information including information about whether the user context information applied to the avatar is public or private. The at least one processor may be configured to determine a public context from the selected user context information based on the obtained preset information.

In an embodiment of the present disclosure, the at least one processor may be configured to change at least one of an appearance, a size, a posture, and a location of the avatar by using pieces of user context information determined as a public context according to the privacy mode.

In an embodiment of the present disclosure, the at least one processor may be configured to identify user context information changed by at least one of information obtained from the at least one sensor or camera and usage history information of an application from among pieces of user context information determined as a public context according to the privacy mode. The at least one processor may be configured to update the avatar by using the identified user context information.

In an embodiment of the present disclosure, the electronic device may further include a display. In response to the application being executed, the at least one processor may be configured to provide data of an updated avatar to the application being executed, and display the updated avatar on the display via the application being executed.

In an embodiment of the present disclosure, the at least one processor may be configured to, in response to a user input for executing an application being received, identify a privacy mode set according to the application. The at least one processor may be configured to determine whether it is necessary to change settings of the identified privacy mode, and change the privacy mode for each piece of user context information based on a result of the determining. The at least one processor may be configured to execute the application in a changed privacy mode.

In an embodiment of the present disclosure, the electronic device may further include a user input interface configured to receive a user input for changing public or private setting information for each piece of the user context information. The at least one processor may be configured to change the privacy mode according to each piece of the user context information based on the user input received via the user input interface.

According to another aspect of the present disclosure, a method, performed by an electronic device, of providing an avatar is provided. The method performed by the electronic device may include selecting user context information to be applied to the avatar from among pieces of user context information obtained via a sensor, a camera, or applications. The method performed by the electronic device may include setting a privacy mode by determining whether to publicly disclose each piece of the selected user context information for each of the applications. The method performed by the electronic device may include updating the avatar based on the set privacy mode. The method performed by the electronic device may include providing an updated avatar via an application being executed.

In an embodiment of the present disclosure, the selecting of the user context information to be applied to the avatar may include registering the selected user context information as avatar management context information for each of the applications.

In an embodiment of the present disclosure, the setting of the privacy mode may include receiving a user input for determining whether to publicly disclose or keep private each piece of the user context information for each of the applications, and determining a public context from the selected user context information based on the received user input.

In an embodiment of the present disclosure, the setting of the privacy mode may include obtaining, for each of the applications, preset information including information about whether the user context information applied to the avatar is public or private, and determining a public context from the selected user context information based on the obtained preset information.

In an embodiment of the present disclosure, in the updating the avatar, the electronic device may change at least one of an appearance, a size, a posture, and a location of the avatar by using pieces of user context information determined as a public context according to the privacy mode.

In an embodiment of the present disclosure, the updating of the avatar may include identifying user context information changed by at least one of information obtained from the sensor or the camera and usage history information of the application from among the pieces of user context information determined as the public context according to the privacy mode, and updating the avatar by using the identified user context information.

In an embodiment of the present disclosure, the providing of the avatar may include, in response to the application being executed, providing data of an updated avatar to the application being executed, and displaying the updated avatar via the application being executed.

In an embodiment of the present disclosure, the providing of the avatar may include, identifying, in response to a user input for executing an application being received, determining whether it is necessary to change settings of the identified privacy mode, changing the privacy mode for each piece of user context information based on a result of the determining, and executing the application in a changed privacy mode.

In an embodiment of the present disclosure, the changing of the privacy mode may include receiving a user input for changing public or private setting information for each piece of the user context information, and changing the privacy mode according to each piece of the user context information based on the received user input.

According to another aspect of the present disclosure, there is provided a computer program product including a computer-readable storage medium having recorded thereon a program to be executed on a computer. Th storage medium may include instructions related to a method, performed by an electronic device, of providing an avatar based on context information, the method including selecting user context information to be applied to the avatar from among pieces of user context information obtained via a sensor, a camera, or applications, setting a privacy mode by determining whether to publicly disclose each piece of the selected user context information for each of the applications, updating the avatar based on the set privacy mode, and providing an updated avatar via an application being executed.

A program executed by the electronic device 100 described in this specification may be implemented as a hardware component, a software component, and/or a combination of the hardware component and the software component. The program may be executed by any system capable of executing computer-readable instructions.

Software may include a computer program, a piece of code, an instruction, or a combination of one or more thereof, and configure a processing device to operate as desired or instruct the processing device independently or collectively.

The software may be implemented as a computer program including instructions stored in computer-readable storage media. Examples of the computer-readable recording media include magnetic storage media (e.g., ROM, RAM, floppy disks, hard disks, etc.), optical recording media (e.g., compact disc (CD)-ROM and a digital versatile disc (DVD)), etc. The computer-readable recording media may be distributed over computer systems connected through a network so that computer-readable code may be stored and executed in a distributed manner. The media may be readable by a computer, stored in a memory, and executed by a processor.

A computer-readable storage medium may be provided in the form of a non-transitory storage medium. In this regard, the term 'non-transitory' only means that the storage medium does not include a signal and is a tangible device, and the term does not differentiate between where data is semi-permanently stored in the storage medium and where the data is temporarily stored in the storage medium. For example, the 'non-transitory storage medium' may include a buffer in which data is temporarily stored.

Furthermore, programs according to embodiments disclosed in the present specification may be included in a computer program product when provided. The computer program product may be traded, as a product, between a seller and a buyer.

The computer program product may include a software program and a computer-readable storage medium having stored thereon the software program. For example, the computer program product may include a product (e.g., a downloadable application) in the form of a software program electronically distributed by a manufacturer of the electronic device 100 or through an electronic market (e.g., Samsung Galaxy Store^{™}). For such electronic distribution, at least a part of the software program may be stored in the storage medium or may be temporarily generated. In this case, the storage medium may be a storage medium of a server of a manufacturer of a vehicle or the electronic device 100, a server of the electronic market, or a relay server for temporarily storing the software program.

In a system including the electronic device 100 and/or a server, the computer program product may include a storage medium of the server or a storage medium of the electronic device 100. Alternatively, in a case where there is a third device (e.g., a mobile device) communicatively connected to the electronic device 100, the computer program product may include a storage medium of the third device. Alternatively, the computer program product may include a software program itself that is transmitted from the electronic device 100 to the third device or that is transmitted from the third device to the electronic device 100.

In this case, one of the electronic device 100 and the third device may execute the computer program product to perform methods according to embodiments of the present disclosure. Alternatively, at least one of the electronic device 100 and the third device may execute the computer program product to perform the methods according to the embodiments of the present disclosure in a distributed manner.

For example, the electronic device 100 may execute the computer program product stored in the memory (140 of FIG. 2) to control another electronic device (e.g., a mobile device) communicatively connected to the electronic device 100 to perform the methods according to the embodiments of the present disclosure.

In another example, the third device may execute the computer program product to control an electronic device communicatively connected to the third device to perform the methods according to the disclosed embodiments.

In a case where the third device executes the computer program product, the third device may download the computer program product from the electronic device 100 and execute the downloaded computer program product. Alternatively, the third device may execute the computer program product that is pre-loaded therein to perform the methods according to the disclosed embodiments.

While the embodiments have been described above with reference to limited examples and figures, it will be understood by those of ordinary skill in the art that various modifications and changes in form and details may be made from the above descriptions. For example, adequate effects may be achieved even when the above-described techniques are performed in a different order than that described above, and/or the aforementioned components such as computer systems or modules are coupled or combined in different forms and modes than those described above or are replaced or supplemented by other components or their equivalents.

## Claims

1. An electronic device for providing an avatar, the electronic device comprising:
a camera;
at least one sensor;
a memory storing at least one instruction; and
at least one processor configured to execute the at least one instruction to
select user context information to be applied to the avatar from among pieces of user context information obtained via the at least one sensor, the camera, or applications,
set a privacy mode by determining whether to publicly disclose each piece of the selected user context information for each of the applications,
update the avatar based on the set privacy mode, and
provide an updated avatar via an application being executed.

2. The electronic device of claim 1, wherein the at least one processor is further configured to register the selected user context information as avatar management context information for each of the applications.

3. The electronic device of claim 1, further comprising
a user input interface configured to receive a user input for determining whether to publicly disclose or keep private each piece of the user context information for each of the applications,
wherein the at least one processor is further configured to
determine a public context from the selected user context information based on the user input received via the user input interface.

4. The electronic device of claim 1, wherein
the at least one processor is further configured to
obtain, for each of the applications, preset information including information about whether the user context information applied to the avatar is public or private, and
determine a public context from the selected user context information based on the obtained preset information.

5. The electronic device of claim 1, wherein the at least one processor is further configured to change at least one of an appearance, a size, a posture, and a location of the avatar by using pieces of user context information determined as a public context according to the privacy mode.

6. The electronic device of claim 1, wherein
the at least one processor is further configured to
identify user context information changed by at least one of information obtained from the at least one sensor or camera and usage history information of an application from among pieces of user context information determined as a public context according to the privacy mode, and
update the avatar by using the identified user context information.

7. The electronic device of claim 1, further comprising
a display,
wherein the at least one processor is further configured to,
in response to the application being executed, provide data of an updated avatar to the application being executed, and
display, on the display, the updated avatar via the application being executed.

8. A method, performed by an electronic device, of providing an avatar based on context information, the method comprising:
selecting user context information to be applied to the avatar from among pieces of user context information obtained via a sensor, a camera, or applications;
setting a privacy mode by determining whether to publicly disclose each piece of the selected user context information for each of the applications;
updating the avatar based on the set privacy mode; and
providing an updated avatar via an application being executed.

9. The method of claim 8, wherein the selecting of the user context information to be applied to the avatar comprises registering the selected user context information as avatar management context information for each of the applications.

10. The method of claim 8, wherein
the setting of the privacy mode comprises:
receiving a user input for determining whether to publicly disclose or keep private each piece of the user context information for each of the applications; and
determining a public context from the selected user context information based on the received user input.

11. The method of claim 8, wherein
the setting of the privacy mode comprises:
obtaining, for each of the applications, preset information including information about whether the user context information applied to the avatar is public or private; and
determining a public context from the selected user context information based on the obtained preset information.

12. The method of claim 8, wherein the updating of the avatar comprises
changing at least one of an appearance, a size, a posture, and a location of the avatar by using pieces of user context information determined as a public context according to the privacy mode.

13. The method of claim 8, wherein
the updating of the avatar comprises:
identifying user context information changed by at least one of information obtained from the sensor or the camera and usage history information of an application from among pieces of user context information determined as a public context according to the privacy mode; and
updating the avatar by using the identified user context information.

14. The method of claim 8, wherein
the providing of the avatar comprises:
in response to the application being executed, providing data of the updated avatar to the application being executed; and
displaying the updated avatar via the application being executed.

15. A computer program product including a computer-readable storage medium, wherein
the storage medium comprises instructions related to a method, performed by an electronic device, of providing an avatar based on context information, the method comprising:
selecting user context information to be applied to the avatar from among pieces of user context information obtained via a sensor, a camera, or applications;
setting a privacy mode by determining whether to publicly disclose each piece of the selected user context information for each of the applications;
updating the avatar based on the set privacy mode; and
providing an updated avatar via an application being executed.
